# EUROPEAN PATENT SPECIFICATION

(11) **EP 0 844 772 B1**
(45) Date of publication and mention of the grant of the patent: **13.08.2003**
(21) Application number: 97923103.2
(22) Date of filing: 28.05.1997
(51) Int. Cl.: H04M 1/11, G06F 15/02, H04M 1/21, A44C 5/14

(54) **BRACELET TELEPHONE DEVICE**
ARMBANDTELEFONGERÄT
DISPOSITIF TELEPHONIQUE SOUS FORME DE BRACELET

(30) Priority: 07.06.1996 ES 9601563 U
(43) Date of publication of application: 27.05.1998
(73) Proprietor: Fernandez Martinez, José Ignacio, 03003 Alicante (ES)
(72) Inventor: Fernandez Martinez, José Ignacio, 03003 Alicante (ES)
(74) Representative: De Arpe Fernandez, Manuel
(86) International application number: PCT/ES97/00133
(87) International publication number: WO 97/048222

(56) References cited:
- WO-A-96/33569
- CH-A- 587 471
- GB-A- 2 194 119
- US-A- 4 586 827
- US-A- 5 224 076
- PATENT ABSTRACTS OF JAPAN vol. 017, no. 456 (E-1418), 20 August 1993 (1993-08-20) & JP 05 102909 A (MATSUSHITA ELECTRIC IND CO LTD)
- PATENT ABSTRACTS OF JAPAN vol. 018, no. 373 (P-1769), 13 July 1994 (1994-07-13) & JP 06 102374 A (FUJITSU LTD)
- PATENT ABSTRACTS OF JAPAN vol. 095, no. 003, 28 April 1995 (1995-04-28) & JP 06 350506 A (MATSUSHITA ELECTRIC IND CO LTD)

## Description

The invention refers to a bracelet telephone device including a mobile telephone or wireless telephone terminal according to the features of patent claim 1. Preferred embodiments of invention are defined in the dependent claims.

In the present days, the use of portable telephone devices which allows the user to be in permanent contact with his work place, his clients, his home, etc. is more and more extended. Such devices present the disadvantages which are logically derived from its transport, such as the inconvenience of carrying them in the hand, in a case which can be adapted to the belt, in a handbag or a purse used for that purpose; as well as their continuous loss at the clients place or other places and the inability of using the hands for other works at the same time.

On the other hand, in our days, and especially in the bussiness world, there are more and more elements and electronic or other kind of devices that, unceasingly, are necessary to perform the pretended functions. It is necessary to point out the continuous need to use timers, chronometers, calculating machines, electronic diaries, computers, alarms, etc., which makes that the problems to transport such elements for a person who, because of the characteristics of his job, has to carry them out into different places and moving frequently, are more important every day, with the paradoxical case that, often, the inconveniance of the need for the mentioned continuous transport is more important than the work proper.

Equally, the above mentioned problem, derived from the need of using at the same time any of the mentioned elements and the telephone, which is very difficult, not to say impossible, before the necessity of holding the later in one hand, has a lot of relevance.

From the prior art derives the existance of a device which can be worn on the user's wrist and provided with a telephone element, computer and timer; but such device has several disadvantages such as the difficult use of the former, the most important, which makes it necessary to pull down a cover to which the earphone is incorporated, something which is very difficult because of the way it is positioned on the forearm and the hard weight that it has to hold up.

Today, other elements resulting from the study of the prior art, such as timers provided with minuscule telephone devices, are just a fancy or a curiosity, since, because of their size, it is impossible to obtain the services which are usually needed, with no mention of the great difficulty to dial.

In the modern days, there are many situations in which the fact of having an alarm may be decisive in a so favourable way that it may even save a life, for example in the case of a person who is suddenly ill and is alone, in the case of a robbery or any other incident which requires the help of somebody else. The use of alarms at premises or vehicles is frequent, whether they are optical, sonic, ultrasonic or telephonic; but they are usually not used by humans; something which could be very usefull in the cases such as the one already mentioned, or others such as the case of a person who travels alone on a not very frequented road or who performs danger jobs, a cashier of a bank, etc., jobs in which, for example, an alarm telephone with a call to his home, his work place, a police station or some other appropriate places, could be decisive many times, but, especially, would be a greater rest for the user.

All of the facts directed to improve the lack of the necessary conditions in which are involved the persons suffering a handicap have a lot of human and social relevance. In the case of a blind person, who, because of her handicap, is probably the one who especially needs to communicate with more precision with the rest of the persons through sounds, she has the problem of the difficulty to perform telephone calls and, if they have the chance, when they get used enough to a certain apparatus, they can dial a certain number, even though this means to them an obstacle leading to a greater effort and, furthermore, they need a long time to get used to the features of the apparatus, something which will occurs each time that they change it. CH-587 471-A relates to a device comprising: a radio telephone with joining means to be coupled to an embracing element; electronic connection buses inserted in the embracing elements, which embracing elements can be separataed in two parts and joined again; and further blocks with various devices can be joined to embracing elements. Here the use of a mobile telephone, the earphone of which can be separated therefrom neither the utilization of a supporting element or body, which can be releasely fitted on embracing element for placing of at least a device is not disclosed.

GB-A-2 194 119 discloses a status reporting apparatus which comprises a number of sensors which monitor a status or security condition, and circuitry which produces a status report comprising the identity and location of the apparatus and an indication of the status condition. An auto-dialer connected to a cellular telephone is used to send the status report to a remote location. A typical application with which the invention is concerned is in the monitoring of a security or hazard condition.

By Patent Abstracts of Japan Vol. 017, No. 456 (E-1418), 20 August 1993 and JP-05 102909-A is known a portable radio telephone set to attain a quick and easy input operation with use of the Braille and without looking a display part end then to easily confirm input operation in voices. Information on a desired telephone number or a function selecting/setting item is inputted with the sequential pushes of the keys of a keyboard. At the same time, the input information is converted into sound signals through a sound converting part included in a portable radio telephone set main body, these sound signals are outputted through a speaker and the answer contents corresponding to the input information are also outputted in voices through the speaker.

The object of the invention is to develop a telephone device which can be adapted to the wrist and forearm of the user and which can be simply and comfortably used, which weights as less as possible and with an alarm system as well as a keyboard having Braille code for blind people and optionally joined to other elements, such as timers, chronometers, calculating machines, electronic diaries, computers or any others.

According to the present invention, the premises followed are reached by means of a mobile telephone or a wireless telephone terminal, with an extractible earphone and a conductor, enclosed with insulating material for the connection of the suitable battery, as well as an alarm and a keyboard complementary to the usual, engraved with the Braille code; the telephone element of which is provided with joint members to a wrist and forearm embracing element that on its opposite side, can also be joined or not to another supporting element or body, bearing one or various devices, such as a timer, a chronometer, a calculating machine, an electronic diary, a computer, etc. In such a way, the extractible earphone will allow a simple and comfortable use, as well as other advantages which, will be named later, the separation of the battery, will obtain the sensible reduction of the weight upon the arm, and the rest of the elements and devices, optionals, will fulfil the functions they had assigned, being selectively changed by the user.

Some other features and advantages of the invention will result clearer from the following description, performed with the help of the drawings enclosed, refering to an embodiment example non restrictive, and where:
Figure 1 illustrates a top view of the telephone device, with the detail of three of the positions which can be adopted by the earphone which it has, joined to the embracing element.
Figure 2 shows a longitudinal elevation view corresponding to the said elements.
Figure 3 illustrates a side elevation view of the same elements.
Figure 4 represents a perspective view of the same elements, on the optional case of being joined to the above mentioned embracing element in the opposite side of the telephonic device, a comprehensive body of one or various different elements.
Figure 5 illustrates a side elevation view of the whole, represented on the perspective of Figure 4.

The mobile telephone and/or wireless telephone terminal 1, is provided with conventional means 2 which allows the joining of an embracing element 3, such as a chain, wristband, strap, belt, clip or any other appropriated for its suitable fixing to the user's forearm; at the same time that they form an opening to allow the way inside the telephone element 1 of optional electronic connection buses 14, inserted into the embracing element 3.

The said telephone device 1 will have an anatomical configuration suitable to be adapted to the forearm of the user and will be provided, on the face which is in contact with the skin, with a layer 4 made of an appropriate material so as to allow a flexible support, a soft and comfortable contact, with suitable properties from the dermatologic and antialergic point of view, such as rubber or latex, scientifically treated to obtain such properties, as the case may be.

The interior face of the embracing element 3, intended for remaining in contact with the user's skin, will have properties similar to the ones described for layer 4.

The mobile telephone and/or wireless telephone terminal 1, having an earphone 8 placed in its interior; the earphone is able to move through suitable guides or other means to get out to the exterior of the mobile telephone case or box 100 where it is placed until it is separated from it. Such a property, besides solving the inconvenient of using previous apparatus which require to pull down the cover to which they are incorporated, has the advantage of being able to adjust the distance between the microphone and the earphone, so as to be adapted to the one which is between the mouth and the ear of the different users and, in the case of complete exit, the ones derived from its possible connection with any exterior peripheric element, the refered to its aproximation to a recorder or an amplifier when desired, the possibility to stop listening to a third person, as well as the ones of the option of connecting to computers, printers or other elements.

The connection maintenance between the earphone 8 which can be separated and the rest of the telephonic device 1, is possible by using a wiring 9, very extensible and rolled-up in the inside of the telephonic device or the supplementary exterior one, or even by means of proper wireless connection, providing it of elements of enough sensibility and power. The said earphone which can be separated may serve, at the same time, as a complement to work as a "walkman", a flap element, a miniature, a pocket, etc.

In order to lighten the weight that the user's forearm has to hold, the telephone device 1 has a extensible and roll-up wiring 13, the opposite end of which is connected to the appropriate battery that, in this way, may be accommodated inside a pocket, independently from the rest of the apparatus, joined to the forearm.

In the same way, optionally, it may be provided with an alarm, which can be complemented or not with a personal code, actuated through a pushbutton 10 or two of them so as to avoid any accidental non desired activation; it may be the said optical alarm, to call up the attention; sonic for the said task or to provoke the escape of a possible aggressor; ultrasonic to be received on a preestablished place, or telephonic to cause the connection with a preset number by introduction on the memory for the purpose. The relevance of this device is evident for the cases of emergency, robbery, misleading of children or elderly and security for certain ill people with a cardiovascular, asthmatic, epileptic disease, a handicap, etc., or simply for a person who travels alone, in the case of an accident.

In the same way, as an optional equipment complementary to the totality of the keyboard or to the main keys II, the existence of a additional keyboard 12 engraved with the Braille code symbols, so as to make easier its use for blind people, is a very important innovation.

The embracing element 3, consisting of a chain, strap, wristband, clip or any other, may be joined by its opposite zone to a supporting element or body 5, provided with a recessed area 7 in which there may be one or various elements, such as timers, chronometers, alarms, calculating machines, electronic diaries, computers or others. For this purpose, the body 5, which will be provided with a layer 6 with the same properties than the 4 from the telephone element 1 for a pleasant and harmless contact with the user's skin and that, like it, will be provided with a suitable anatomical form, will also have joining or adaptable means to the said embracing element, as well as an opening suitable for the passage of the electronic connection buses 14, inserted inside of it.

The electronic connections may take place through the refered bus elements 14 or form independent electronic connection elements. The whole may be provided with connection points adapted for external peripheric elements, such as battery fillers, supplementary batteries, etc.

It could be possible to provide some, various or the whole of the devices and accommodated elements with independent batteries of less capacity, for maintaining its independent operativity, or as deposit for energy or even for managing without the principal during provisional periods.

The microphone corresponding to the telephone device 1, may be provided, optionally, with a pull down cover so as to improve the quality of the transmited sound; to incorporate the said microphone to the said pull down cover or to eliminate it, using an adequated polarizing microphone.

With all, besides the related advantages, it is possible to provide with various supporting elements or bodies 5, provided just with one or with various elements and to interchange them, depending on the needs of each moment.

Naturally, the telephone device 1, will be provided with extensible pertinent antenna 15.

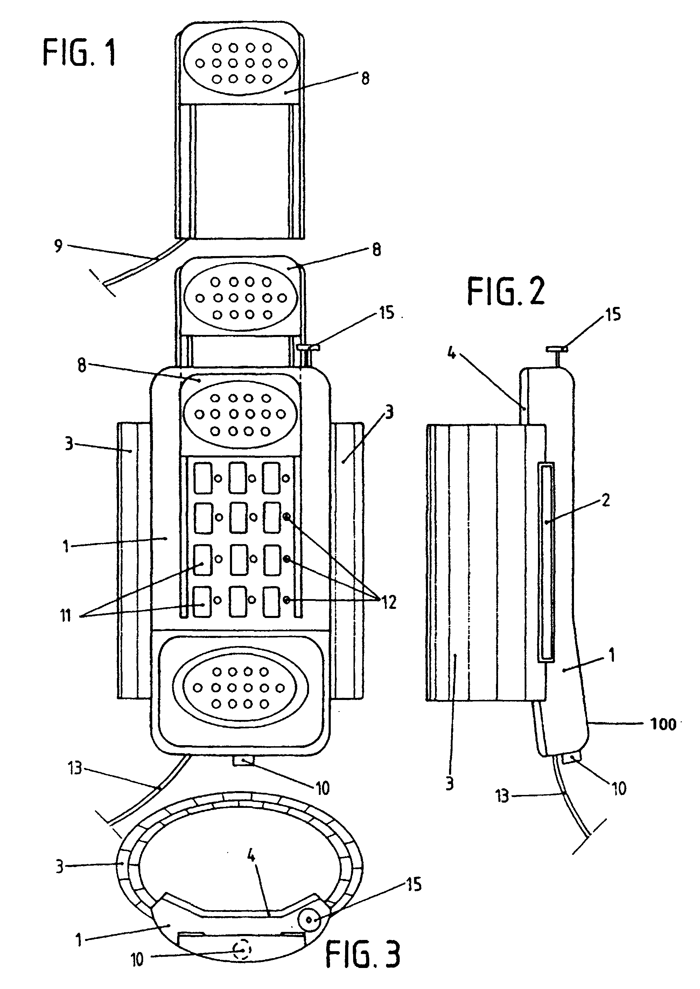

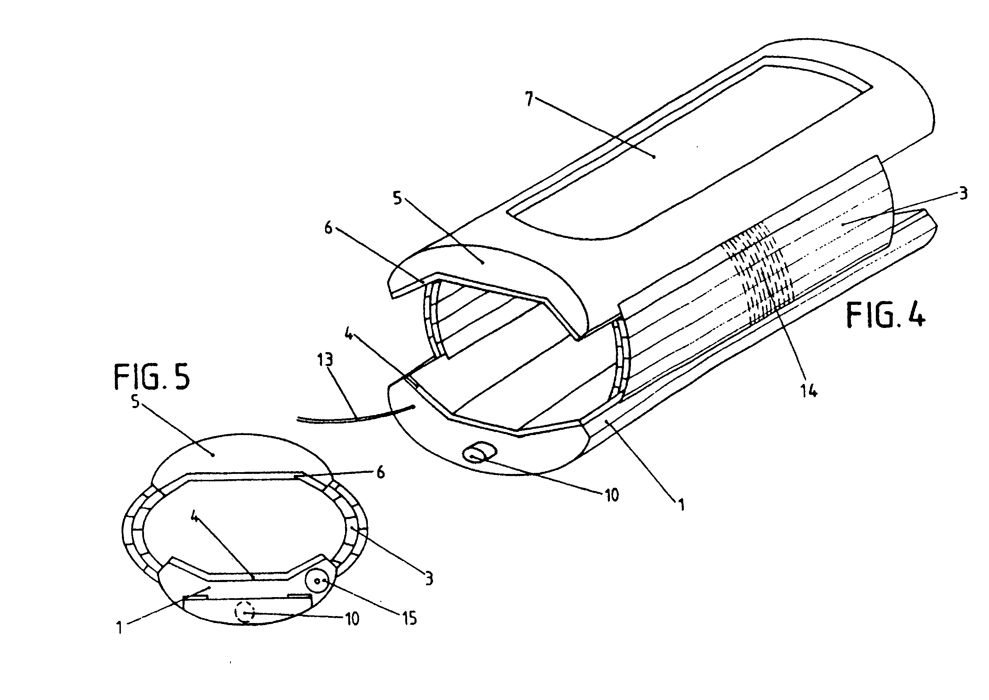

The embracing element 3 will be preparated in a convenient way so as to be able to be joined to or separated from the area opposite to the telephonic element 1, through its greater simetric axis, as well as the electronic connection buses 14 which are inserted in it, in order to, at the users wish, make it possible to carry only the telephone device 1, by joining it (case represented in figure 3) or to be joined to an element or block with a plurality of them (case represented in figures 4 and 5), as well as to replace, according to its needs, a block or element with another one. For this purpose, in the same way, the means of a catch or an electronic connection of the elements and supporting elements or bodies 5, which will have to receive the longitudinal edges free from the element 3 and its buses 14, will be properly prepared for it.

It must be noted that, for reasons of descriptive economy, the detailed explanation of those elements that, because they are conventionals, they allow the possibility of chosing among them, has been avoided, and so they might be provided or selected in the forms that can be considered technically and industrially more appropriated.

The object of the invention has been described sufficiently, so it is only necessary to point out that the resulting embodiments about form, sizes, similar materials changes, as well as the derived from a routine application from what was developped before, must been included in its scope, in such a way that the invention will only be limited within the following claims.

## Claims

1. Bracelet telephone device, having:
- a mobile telephone or wireless telephone terminal (1) with a case or box (100) and a main keyboard (11);
- embracing element(3) for coupling releasely the mobile telephone or wireless telephone terminal, where electronic buses (14) are provided into said embracing element (3) with the purposes to connect the mobile telephone or wireless telephone terminal with others various elements mounted on the embracing elements ; **characterized in that**
the mobile telephone or wireless telephone terminal (1) includes an earphone (8) which moves upon guides or other means provided in the case or box (100) of said mobile telephone or wireless telephone terminal, so as to allow its exit to the exterior and position on the desired point; the earphone can move until its total separation from said mobile telephone or wireless telephone terminal (1) to which it belongs, whereby the connection between the telephone and the earphone is maintained by an extensible, roll-up wiring (9) or by a wireless connection.

2. Bracelet telephone device, according to claim 1, **characterized in that**, a supporting element or body (5) having a recessed area (7) is provided for coupling releasely to the embracing element (3), where said recessed area (7) on the supporting element or body (5) serves to place one or various elements, such as timers, chronometers, alarms, calculating machines, electronics diaries or computer, which may be connected to the mobile telephone or wireless telephone terminal (1) by the buses (14).

3. Bracelet telephone device, according to claim 1 **characterized in that** its configuration is adapted to install optical, sonic, ultrasonic or telephonic alarm devices, activated by a security pushbutton (10).

4. Bracelet telephone device, according to claim 1, **characterized in that** the mobile telephone or wireless telephone (1) includes an additional keyboard (12), which incorporates engraved Braille code symbols to be read by blind people.

5. Bracelet telephone device, according to claim 1, **characterized in that** its battery may be separated from the whole, to which it keeps connected by means of an extensible and roll-up wiring (13) or other appropiated means.

## Patentansprüche

1. Armband-Fernsprecheinrichtung, die aus Folgendem besteht:
- Ein Handy- oder Schnurlostelefon-Terminal (1) mit einem Futteral oder einer Schachtel (100) und einem Haupttastenfeld (11);
- Ein Befestigungselement (3), um das Handy oder das Schnurlostelefon in einer nicht permanenten Weise zu befestigen, wobei im besagten Befestigungselement (3) elektronische Busse (14) installiert worden sind, um das Handy oder das Schnurlostelefon mit den sonstigen Elementen zu verbinden, die am Befestigungselement montiert sind, **dadurch gekennzeichnet, dass** das Handy oder Schnurlostelefon (1) einen Hörer (8) umfasst, der auf Führungen oder sonstigen Mitteln bewegt wird, die sich im Futteral oder der Schachtel (100) des besagten Handys oder Schnurlostelefons befinden, damit er herausgezogen und an der gewünschten Stelle angebracht werden kann. Der Hörer kann so weit bewegt werden, bis er vom besagten Handy oder Schnurlostelefon (1), zu dem er gehört, vollkommen getrennt ist, wobei die Verbindung anhand eines abwickelbaren Verlängerungskabels (9), das sich zwischen dem Telefon und dem Hörer befindet, oder anhand einer schnurlosen Verbindung erfolgt.

2. Armband-Fernsprecheinrichtung in Übereinstimmung mit dem Anspruch 1, **dadurch gekennzeichnet, dass** sie ein Halterungselement oder einen Körper (5) mit einem hohlen Bereich (7) für ihre nicht ständige Verbindung mit dem Befestigungselement (3) umfasst, wobei der besagte hohle Bereich (7) des Halterungselements oder Körpers (5) dazu dient, ein oder mehrere Elemente aufzunehmen, wie Uhren, Chronometer, Alarme, Rechner, elektronische Notizbücher oder Computer, die an das Handy oder das Schnurlostelefon (1) über die Busse (14) angeschlossen werden können.

3. Armband-Fernsprecheinrichtung in Übereinstimmung mit dem Anspruch 1, **dadurch gekennzeichnet, dass** ihre Konfiguration so angepasst ist, dass optische, akustische, telefonische Alarmeinrichtungen und solche mit Ultraschall installiert werden können, die über eine Sicherheitstaste (10) aktiviert werden.

4. Armband-Fernsprecheinrichtung in Übereinstimmung mit dem Anspruch 1, **dadurch gekennzeichnet, dass** das Handy oder Schnurlostelefon (1) ein zusätzliches Tastenfeld (12) umfasst, das Symbole der Braille-Schrift enthält, die so graviert sind, dass sie von Blinden gelesen werden können.

5. Armband-Fernsprecheinrichtung in Übereinstimmung mit dem Anspruch 1, **dadurch gekennzeichnet, dass** ihre Batterie von der ganzen Gruppe entfernt werden kann, mit der sie über ein abwickelbares Verlängerungskabel (13) oder einer anderen geeigneten Vorrichtung verbunden ist.

## Revendications

1. Dispositif de téléphone à porter au poignet, avec
- un téléphone cellulaire ou un terminal de téléphone sans fil (1) avec une carcasse ou une boîte (100) et un clavier pirncipal (11);
- un élément de fixation (3) pour le couplage amovible du terminal du téléphone cellulaire ou du téléphone sans fil, oú bus électroniques (14) sont prévus sur cet élément de fixation (3) afin de raccorder le terminal du téléphone cellulaire ou du téléphone sans fil à divers éléments montés sur les éléments de fixation, il est **caractérisé en ce que**:
le téléphone cellulaire ou le terminal de téléphone sans fil (1) comprend un écouteur (8) qui se déplace sur des guides, ou sur d'autres moyens prévus sur la carcasse ou la boîte (100) de cet téléphone cellulaire ou de ce téléphone sans fil, permettant de le sortir à l'extérieur et de le placer à l'enroit souhaité; l'écouteur peut être deplacé jusqu'à sa séparation totale du terminal (1) du téléphone cellulaire ou du terminal de téléphone sans fil (1) auquel il appartient, c'est pour la ce la connexion entre le téléphone et l'écouteur est ainsi maintenue par un câblage (9) à enroulement ascendant, extensible, ou par un raccordement sans fil.

2. Dispositif de téléphone à porter au poignet, selon la revendication 1, il est **caractérisé en ce qu'**un élément, soit le corps du support (5) qui possède un logement (7) est prévu pour permettre le couplage amovible avec l'élément de fixation (3), oú dit logement (7) sur l'élément ou le corps du support (5) sert a placer un ou plusieurs éléments, tels que des synchroniseurs, des chronomètres, des alarmes, des machines à calculer, des agendas électroniques ou un ordinateur, que peuvent être raccordés au téléphone cellulaire ou terminal de téléphone sans fil (1) via les bus (14).

3. Dispositif de téléphone à porter au poignet, selon la revendication 1, **caracterisé en ce que** sa configuration permet l'installation de dispositifs d'alarme optique, sonique, à ultrason ou téléphonique, activés par un bouton de sécurité (10).

4. Dispositif de téléphone à porter au poignet, selon la revendication 1, **caracterisé en ce que** le téléphone cellulaire ou le terminal de téléphone sans fil (1) comprend un clavier supplémentaire (12) intégrant des symboles du code braille permettant la lecture par des personnes aveugles.

5. Dispositif de téléphone à porter au poignet, selon la revendication 1, **caractérisé en ce que** sa batterie peut être séparée de l'ensemble auquel elle est reliée par un câblage extensible à enroulement ascendant (13) ou d'autres moyens appropries.
